# EUROPÄISCHE PATENTSCHRIFT

(11) **EP 0 695 329 B1**
(45) Veröffentlichungstag und Bekanntmachung des Hinweises auf die Patenterteilung: **23.06.1999**
(21) Anmeldenummer: 94913582.6
(22) Anmeldetag: 13.04.1994
(51) Int. Cl.: C09D 11/10, B32B 27/00

(54) **Verfahren zur Herstellung einer laminierten Mehrschichtkunststofffolienstruktur aus Polyolefin unter Verwendung einer komplexierbaren Farbenzusammensetzung auf Wasserbasis enthaltend ein Acrylharz und ein Aminoharz**
Method for producing laminated multilayered plastic foil structures of polyolefin using a complexable water-based paint composition containing an acrylic resin and an amino resin
Méthode de production de feuilles plastique à structure laminée et multicouche en polyolefine utilisant une composition complexable de peinture à base d'eau contenant une résine acrylique et une résine aminée.

(30) Priorität: 14.04.1993 FR 9304362
(43) Veröffentlichungstag der Anmeldung: 07.02.1996
(73) Patentinhaber: BASF Coatings Aktiengesellschaft, 48165 Münster (DE)
(72) Erfinder: MALOBERTI, Yves, F-60460 Précy-sur-Oise (FR)
(74) Vertreter: Fitzner, Ulrich, Dr.
(86) Internationale Anmeldenummer: EP9401133
(87) Internationale Veröffentlichungsnummer: WO9424217

(56) Entgegenhaltungen:
- WO-A-90/03412
- FR-A- 2 121 221
- US-A- 4 309 179
- DATABASE WPI Week 8820, Derwent Publications Ltd., London, GB; AN 88-139024 & SU,A,1 344 771 (KIEV PRINTING PROBL)
- DATABASE WPI Week 7130, Derwent Publications Ltd., London, GB; AN 71-49840S & SU,A,280 729 (FILM MATERIALS AND SYNTH.)
- DATABASE WPI Week 8218, Derwent Publications Ltd., London, GB; AN 82-36618E & DD,A,216 029 (STIMSON R M)

## Beschreibung

Die vorliegende Erfindung betrifft im wesentlichen eine komplexierbare Farbenzusammensetzung zum Auftrag auf eine gegebenenfalls lackierte Kunststoffolie, vorzugsweise aus biorientiertem Polypropylen. Die Erfindung betrifft im einzelnen ein Verfahren zur Herstellung einer laminierten Mehrschichtkunststoffolienstruktur unter Verwendung einer komplexierbaren Farbenzusammensetzung.

Dem Fachmann ist hinreichend bekannt, daß es sich bei einer komplexierbaren Farbe um eine Farbe handelt, mit der Kunststoffolien bedruckt werden und die dann mit einer weiteren Kunststoffolie kaschiert wird. Dieser Aufbau erfolgt mit Hilfe eines Klebstoffs, und außer den geforderten Bedruckbarkeitseigenschaften muß die Farbe stets Bindungskräfte entwickeln, durch die vor und nach der Versiegelung eine gute Haftung zwischen den beiden Trägern gewährleistet werden kann.

Zur Erfüllung dieser Forderungen sind zwar bestimmte Lösungsmittelsysteme speziell formuliert worden, jedoch die vom Umweltschutz geforderten Grenzwerte zwingen den Verarbeiter von Kunststoffolien dazu, wäßrige Farben und nicht lösungsmittelhaltige zu verwenden. Nun sind bei den wäßrigen Farben die Bindungskräfte im allgemeinen schwach bis mäßig stark, und durch die Einwirkung der Versiegelungseisen in den Verpackungsmaschinen verschlechtern sie sich oder verschwinden vollkommen.

Somit stellen die zum Auftrag auf Kunststoffolien bestimmten komplexierbaren Farben, die anschließend unter Bildung einer kaschierten Mehrschicht-Kunststoffolienstruktur mit einer weiteren Kunststoffolie verklebt werden, ein spezielles Fachgebiet dar.

Dieser spezielle Charakter erfordert die Verwendung von Farbenzusammensetzungen auf Wasserbasis, die komplexierbar sind oder im Rahmen laminierter Produkte zur Verwendung kommen sollen. Farbenzusammensetzungen als solche auf Wasserbasis enthaltend Acrylharz und/oder vinylharz und ein Aminoharz sind bekannt aus den Dokumenten DATABASE WPI, Week 8820, AN 88-139024, DATABASE WPI, Week 7130, AN 71-489405, DATABASE WPI, Week 8218, AN 82-36618E und US-A-4,309,029. Ein dem Stand der Technik entsprechendes Dokument ist z.B. die WO-90/03412, die eine Farbenzusammensetzung zur Herstellung laminierter Produkte auf korrosionsschützender Wasserbasis zum Gegenstand hat; diese Zusammensetzung enthält ein alkalilösliches Acrylharz, Copolymere des Polyvinylchlorids mit einem niedrigen Tg im Temperaturbereich von 0 bis 49°C, Copolymere des Polyvinylchlorids mit hohem Tg im Temperaturbereich von 50 bis 100°C, Metallteilchen sowie eine wäßrige Phase mit einer Epoxykomponente. Zur Löslichmachung des Acrylharzes in Wasser kann ebenfalls ein Aminoalkohol zum Einsatz kommen.

Die Aufgabe der vorliegenden Erfindung besteht darin, eine komplexierbare Farbenzusammensetzung auf Wasserbasis zum Auftrag auf eine Kunststoffolie aus Polyolefin und insbesondere aus gegebenenfalls lackierten Polypropylenen bereitzustellen, die verbesserte Bindungskräfte von vorzugsweise mindestens 200 g pro 15 mm vor und nach dem Versiegeln aufweist, wobei diese Werte mittels eines Zugkraftmessers ermittelt werden.

Eine weitere Aufgabe der Erfindung besteht darin, die Lösung dieses Problem mittels einer Lösung zu erreichen, durch die eine korrosionsschützende, nicht umweltbelastende Farbenzusammensetzung auf Wasserbasis zur Verfügung gestellt wird.

Durch die vorliegende Erfindung muß ebenfalls ermöglicht werden, daß sich die optimale Reaktionsfähigkeit des Farblackfilms beim Abscheiden des zum Verkleben der zwei Polymerschichten aus Polyolefin vorgesehenen Klebstoffs entwickelt.

Eine weitere Aufgabe der vorliegenden Erfindung ist es, die Lösung dieser technischen Probleme mittels einer Lösung zu erreichen, die die Herstellung und Applizierung der Farbe nach den herkömmlichen Methoden für Flüssigfarben für die Verpackung ermöglicht.

Eine weitere Aufgabe der vorliegenden Erfindung besteht darin, die Lösung dieser technischen Probleme mittels einer Lösung zu erreichen, durch die eine über einen längeren Lagerzeitraum besonders stabile Farbenzusammensetzung wie im Falle herkömmlicher Farben bereitgestellt werden kann. Diese Stabilitätsdauer muß mindestens mehrere Monate betragen.

Eine weitere Aufgabe der vorliegenden Erfindung besteht darin, die Lösung dieser technischen Probleme mittels einer Lösung zu erreichen, mit der eine Farben-zusammensetzung bereitgestellt werden kann, die gute Bedruckbarkeit, gute Haftung auf der Folie sowie guten Übertragungswiderstand ("blocking") auf der Walze aufweist.

Gemäß der vorliegenden Erfindung werden alle diese technischen Probleme und diese Aufgaben zum ersten Mal auf besonders einfache, kostengünstige, im großtechnischen Maßstab einsetzbare Weise gelöst.

Die Erfindung ist definiert als ein Verfahren zur Herstellung einer laminierten Mehrschichtkunststoffolienstruktur aus Polyolefin unter Verwendung einer komplexierbaren Farbenzusammensetzung auf Wasserbasis in Form einer Dispersion, Emulsion oder in alkalilöslicher Form mit mindestens einem Acryl- und/oder Vinylharz, mit einem Aminoharz und mit einer organischen Base des Amintyps oder Ammoniak, wobei ein pH-Wert zwischen 5 und 10 eingestellt ist, wobei eine erste Polyolefinfolie mit der Farbzusammensetzung bedruckt wird, wobei die bedruckte Polyolefinfolie einer physikalischen Trocknung bei Temperaturen unterhalb 60 °C unterzogen wird, wobei im Zuge der physikalischen Trocknung die organische Base des Amintyps oder der Ammoniak unter Absenkung des pH-Wertes verdampft und so das Acrylharz mit dem Aminoharz polykondensiert und vernetzt wird, wobei anschließend an die physikalische Trocknung ein Klebstoff auf der bedruckten ersten Polyolefinfolie bedruckungsseitig abgeschieden wird, und wobei schließlich eine zweite Polyolefinfolie mit der ersten Polyolefinfolie verschweißt wird.

Gemäß einer vorteilhaften Ausführungsform handelt es sich bei dem obengenannten Aminoharz um ein durch Umsetzung von Formaldehyd mit einem Amin oder Amid erhaltenes Aminoplastkondensat. Als Amine oder Amide sind Harnstoff, Melamin oder Benzoguanamin bevorzugt.

Somit ist in einer bevorzugten Ausführungsform das obengenannte Aminoharz aus der Gruppe:
a) Harnstoff-Formaldehyd-Aminoplastkondensat der folgenden Formel I: 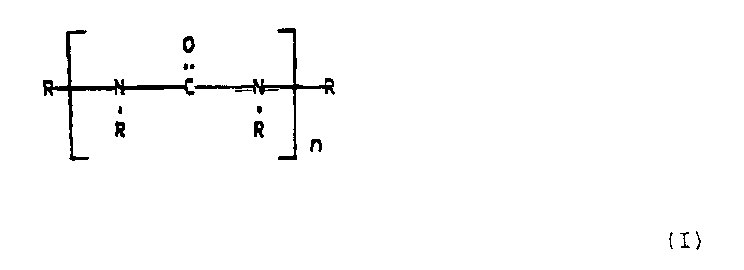
b) Melamin-Formaldehyd-Aminoplastkondensat der folgenden Formel II: 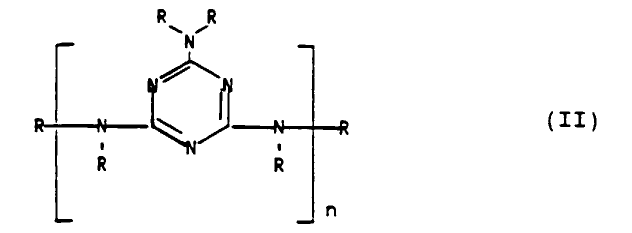
c) Aminoplastkondensat der folgenden Formel III: 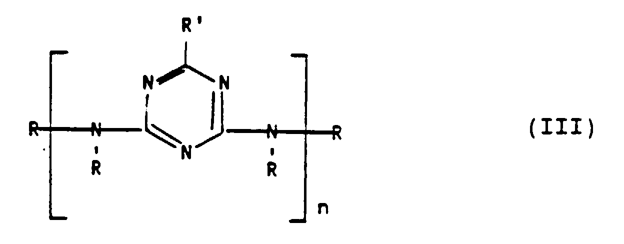 ausgewählt.

In den obengenannten Formeln I, II oder III besitzen die Substituenten folgende Bedeutungen: R kann aus der Gruppe Wasserstoff, einem Rest -CH₂OH; CH₂OR"; -CH₂COOH oder -CH₂COR" ausgewählt sein,
R" ist unabhängig ausgewählt aus einem Niederalkyl-(C₁-C₆)-Rest, insbesondere -CH₃, -C₂H₅, -C₃H₇, -C₄H₉, der Rest R' ist unabhängig ausgewählt aus Wasserstoff, einem Niederalkyl-(C₁-C₆)-Rest, insbesondere -CH₃, -C₆H₅,
n ist eine ganze Zahl, vorteilhafterweise zwischen 1 und 10 und bevorzugt zwischen 1 und 3.

Gemäß einer besonders vorteilhaften Ausführungsform enthält die obengenannte Farbenzusammensetzung ebenfalls eine organische Base des Amintyps und/oder eine organische Säure zur Einstellung des pH-Wertes der Farbenzusammensetzung auf etwa 5 bis etwa 10, wodurch diese Zusammensetzung über einen längeren Lagerzeitraum besonders stabil ist. Gemäß einer bevorzugten Ausführungsform wird der pH-Wert auf etwa 7,5 bis etwa 9 und noch besser auf etwa 7,8 bis etwa 8,5 eingestellt.

Als organische Base läßt sich, wie für den Fachmann leicht ersichtlich, jede organische Base verwenden. Als organische Base ist gegenwärtig Ammoniak oder ein primäres, sekundäres oder tertiäres Alkylamin, insbesondere C₁-C₆-Alkylamin wie Triethylamin, oder ein primäres, sekundäres oder tertiäres Alkanolamin, insbesondere C₁-C₆-Alkanolamin wie Triethanolamin, oder Morpholin besonders bevorzugt.

Gemäß einer noch weiteren besonders vorteilhaften Ausführungsform kann die obengenannte Farbenzusammensetzung ebenfalls eine zweckmäßigerweise starke organische Säure enthalten, zwecks Einstellung der Farbenzusammensetzung auf einen pH-Wert im obengenannten Bereich und insbesondere zwischen 5 und 7 oder zwecks Feineinstellung des pH-Wertes, falls diese organische Säure mit einer der obengenannten organischen Basen des Amintyps kombiniert wird. Als organische Säure ist gegenwärtig para-Toluolsulfonsäure oder eines ihrer Salze oder Ester, insbesondere mit der vorgesehenen Anwendung verträgliche und dem Fachmann hinreichend bekannte Salze und Ester, besonders bevorzugt.

Gemäß einer noch weiteren besonders vorteilhaften Ausführungsform enthält die obengenannte Farbenzusammensetzung eine flüchtige Komponente, die die wäßrige, selbst aus Wasser bestehende Phase, die organische Base des obengenannten Typs und/oder die obengenannte organische Säure sowie gemäß einer vorteilhaften Ausführungsvariante ein insbesondere mit Wasser mischbares organisches Lösungsmittel, beispielsweise vom Typ Alkohol, enthält. Gemäß einer besonderen Ausführungsform beträgt das organische Lösungsmittel, z.B. vom Typ Alkohol, 1 bis 10% des Gesamtgewichts der Farbenzusammensetzung.

Gemäß einer weiteren besonders vorteilhaften Ausführungsform ist das obengenannte Acryl- oder Vinylharz oder eine Mischung aus den obengenannten Acryl- und/oder Vinylharzen durch eine im wesentlichen auf den im Molekül vorhandenen Hydroxyl- und Carboxylgruppen beruhende Säurefunktionalität gekennzeichnet. Die Säurezahl des Acrylharzes liegt vorteilhafterweise zwischen 10 und 300, besonders bevorzugt zwischen 10 und 100, und noch besser zwischen 25 und 50.

Gemäß einer besonderen Ausführungsvariante ist das obengenannte Acrylharz ein Acrylpolymer oder Acrylcopolymer aus Acrylsäure, Methacrylsäure - in Form eines Ester dieser Säuren - und Styrol. Als besonders vorteilhafte Ester sind Acryl- oder Methacrylsäureniederalkyl-(C₁-C₆)-ester, insbesondere Acryl- oder Methacrylsäure-butylester, oder auch Acrylsäure-2-ethylhexylester zu nennen. Zahlreiche in Wasser dispergierbare oder lösliche Acrylpolymere oder -copolymere sind im Bandel erhältlich und im Rahmen der vorliegenden Erfindung einsetzbar, ohne daß hierdurch deren Schutzbereich verlassen wird.

Gemäß eines vorteilhaften Merkmals beträgt das Acrylharz 1 bis 45 Gew-%, auf Trockensubstanz berechnet, des Gesamtgewichts der Farbenzusammensetzung, vorzugsweise 15 bis 35 Gew.-%, auf Trockensubstanz berechnet.

Gemäß einem weiteren Merkmal der Erfindung beträgt das obengenannte Harz des Amintyps zwischen 1 und 15 Gew.-%, auf Trockensubstanz berechnet, vorzugsweise zwischen 1 und 8 Gew.-%, auf Trockensubstanz berechnet, besonders bevorzugt zwischen 2 und 4 Gew.-%, des Gesamtgewichts der Farben-zusammensetzung. Als Aminoharz sind beispielsweise Hexamethoxymethylmelamin, Hexamethoxybutoxymethylmelamin, Iminomethoxymethylmelamin und deren Mischungen besonders bevorzugt.

Die so formulierte Farbenzusammensetzung mit einem pH-Wert von zweckmäßigerweise etwa 5 bis etwa 10 besitzt eine Stabilität vergleichbar mit der herkömmlicher, lösungsmittelhaltiger Farben, d.h. von mehreren Monaten, und ist toxikologisch gesehen sehr günstig. Die Aminoplaste und die Mehrzahl der obengenannten Acryl- und Vinylharze sind in Abschnitt 21 CFR 175 300 und 176 170 der Food and Drug Administration aufgeführt.

Des weiteren erfolgt die Herstellung und Anwendung dieser Farbenzusammensetzung nach den herkömmlichen Verfahren für Flüssigfarben für die Verpackung.

Die so formulierte Farbe eignet sich erfindungsgemäß zum Auftrag auf Kunststoffolien aus Polyolefin und ganz besonders für gegebenenfalls lackierte Kunststoffolien aus biorientierten Polypropylenen.

Wird mit dieser Farbe die Kunststoffolie aus Polyolefin bedruckt, so kommt es im Verlauf der physikalischen Trocknung, z.B. mit warmer Gebläseluft (<60°C), zu einem drastischen Absinken des pH-Wertes im wesentlichen als Folge der Verdampfung der zur Neutralisation des Acrylharzes verwendeten organischen Base des Amintyps, wodurch die Restsäurestärke der auf dem Polymer vorhandenen Carboxyl- und Hydrozylgruppen wiederhergestellt wird, was zu einer anschließenden Polykondensation des Aminoharzes mit dem Acrylharz mit gleichzeitiger Vernetzung führt. Das so gebildete Umsetzungsprodukt ermöglicht es, im Verlauf der Abscheidung des Klebstoffe eine für die Komplexierung potentiell optimale Reaktionsfähigkeit des Farblackfilms zu entwickeln, wobei dieser Reaktionsmechanismus in Gegenwart organischer Säure, insbesondere para-Toluolsulfonsäure oder eines ihrer salze oder Ester, auf gleiche Weise abläuft und diese säurestärke sich zu der von den sauren Gruppierungen des Acryl- und/oder Vinylharzes stammenden addiert.

Die Querverbindungen zwischen Farbe und Klebstoff werden dadurch verstärkt und die Haftung des Aufbaus sichergestellt, was zu einer Verbesserung der Bindungskräfte führt.

Während des Verschweißens der zwei miteinander verbundenen Kunststoffolien aus Polyolefin, zwischen denen die erfindungsgemäße Farbenzusammensetzung sowie der Klebstoff abgeschieden wurde, was im allgemeinen bei einer Temperatur in der Größenordnung von 130 bis 140°C während 1 Sek. bei einem Druck von 3 Bar erfolgt, kommt es anschließend zu einer Beschleunigung der Umsetzung mit den im Polymerteil der Farbe, aber auch des Klebstoffs vorhandenen funktionellen Gruppen, wodurch eine vernetzte Struktur entsteht, die dem Aufbau hervorragende Bindungskräfte verleiht.

Vorteilhafterweise erhält man erfindungsgemäß Bindungskräfte von mindestens 200 g pro 15 mm vor und nach der Versiegelung, wobei diese Werte mittels eines Zugkraftmessers ermittelt werden.

Die vorliegende Erfindung wird nun ausführlicher anhand von verschiedenen Vergleichsbeispielen und verschiedenen erfindungsgemäßen Beispielen beschrieben, so daß quantitative Vergleichsversuche entstehen, die die Überlegenheit der Erfindung gegenüber dem gegenwärtigen Stand der Technik aufzeigen. Die Erfindungsbeispiele sind lediglich zur Veranschaulichung angegeben und können somit nicht den Schutzbereich der Erfindung in irgendeiner Weise einschränken.

In den Beispielen bedeuten alle Prozentangaben Gewichtsprozent und alle Teile Gewichtsteile, falls nicht anders vermerkt.

### Vergleichsbeispiel 1

Vergleichsfarbenzusammensetzung Nr. 1:
- Acrylcopolymer in wäßriger Dispersion, bestehend aus:
   * Acrylsäure-2-ethylhexylester
   * Methacrylsäure-butylester
   * Styrol
   * Acrylsäure
   im Handel erhältlich unter dem Namen Neocryl A1070® (ICI)
   in einer Konzentration von 45 Gewichtsprozent (auf Trockensubstanz berechnet) 60 Teile
- blaue Pigmentpaste mit 45 Gew.-% an organischem Pigment 20 Teile
   [die Paste besteht aus:
   * alkalilöslichem Acrylcopolymer aus Styrol, Methacrylsäurebutylester, Acrylsäure
   im Handel erhältlich z.B. unter dem Namen Joncryl 679®
   - Polymer der Firma Johnson 5,2 Teile

   * Blaupigment, Kupfer-phthalocyanin 45 Teile
   * Propylenglykol 2,2 Teile
   * Isopropylalkohol 0,4 Teile
   * organischer Base des Amintyps, z.B. 32,5%iger Ammoniak 28BE 1,4 Teile
   * Benetzungsmittel 2,3 Teile
   * Wasser 43,5 Teile]
- Ethanol 3 Teile
- Propylenglykol-n-butylether 2 Teile
- schaumverhinderndes Mittel 0,5 Teile
- Wasser 14,5 Teile
- pH-Wert etwa 8,1

### Vergleichsbeispiel 2

### Vergleichsfarbenzusammensetzung Nr. 2:

Diese Vergleichsfarbenzusammensetzung Nr. 2 ist im wesentlichen mit der Vergleichsfarbenzusammensetzung Nr. 1 identisch, außer daß in ihr das Acrylcopolymer der Vergleichsfarbenzusammensetzung Nr. 1 durch eine 1:1-Mischung aus dem gleichen Produkt und einem im Handel unter dem Namen Joncryl 90® - einem Polymer der Firma Johnson - erhältlichen Polymer aus Styrol-Acrylsäure-Methacrylsäurebutylester in einer Konzentration von 44 Gew.-%, auf Trockensubstanz berechnet, ersetzt ist.

### Beispiel 3 (erfindungsgemäß)

### Erfindungsgemäße Farbenzusammensetzung Nr. 1

Diese Farbenzusammensetzung stellt man analog zur Vergleichszusammensetzung Nr. 1 her, indem man 2% Wasser durch 2% Hexamethoxymethylmelamin als Aminoharz ersetzt, das im Handel z.B. unter dem Namen Luwipal 068® in einer Konzentration von 85 Gew.-%, auf Trockensubstanz berechnet, in einer Mischung aus Ethanol/Methanol von der Firma BASF erhältlich ist.

### Beispiel 4 (erfindungsgemäß)

### Erfindungsgemäße Farbenzusammensetzung Nr. 2

Diese erfindungsgemäße Farbenzusammensetzung Nr. 2 stellt man analog zur Vergleichszusammensetzung Nr. 2 des Beispiels 2 her, indem man 2% Wasser durch 2% Hexamethoxymethylmelamin als Aminoharz ersetzt, das im Handel z.B. unter dem Namen Cymel 303® in einer Konzentration von 98 Gew.-%, auf Trockensubstanz berechnet, von der Firma Dynocyanamid erhältlich ist.

### Beispiel 5 (erfindungsgemäß)

### Erfindungsgemäße Farbenzusammensetzung Nr. 3

Diese erfindungsgemäße Farbenzusammensetzung Nr. 3 stellt man analog zur Vergleichsfarbenzusammensetzung Nr. 2 her, indem man 2% Wasser durch 2% Hexamethoxybutoxymethylmelamin als Aminoharz ersetzt, das im Handel z.B. unter dem Namen Cymel 1130® in einer Konzentration von 96 Gew.-%, auf Trockensubstanz berechnet, in Isobutanol von der Firma Dynocyanamid erhältlich ist.

### Beispiel 6 (erfindungsgemäß)

### Erfindungsgemäße Farbenzusammensetzung Nr. 4

Diese erfindungsgemäße Farbenzusammensetzung Nr. 4 stellt man analog zur erfindungsgemäßen Farbenzusammensetzung des Beispiels 4 her, indem man noch einmal 2% Wasser durch 2% Iminomethoxymethylmelamin ersetzt, das im Bandel z.B. unter dem Namen Cymel 327® in einer Konzentration von 90 Gew.-%, auf Trockensubstanz berechnet, in Isobutanol von der Firma Dynocyanamid erhältlich ist.

### Beispiel 7

### Versuch zur Messung der Bindungskräfte durch Auftrag eines Klebstoffs auf eine mit der Farbe bedruckte und mit einer Folie aus Polypropylen kaschierte Kunststoffolie aus Polypropylen mit anschließender Kaschierung.

Wie dem Fachmann auf dem Gebiet der Herstellung bedruckter und mittels eines Klebstoffs verklebter laminierter Mehrschichtfolien bekannt ist, wird zur Durchführung eines quantitativen Vergleichstests zuallererst der gewünschte Druck hergestellt, indem man eine 20 µm dicke Folie aus biorientiertem Polypropylen mittels einer dem Fachmann bekannten Druckmaschine mit einer Farbenzusammensetzung aus jedem der obigen Vergleichs- und erfindungsgemäßen Beispiele bedruckt. Das Auftragsgewicht der Farbenzusammensetzung beträgt 0,6 g/m² (Trockensubstanz).

Es ist zu beachten, daß beim Bedrucken der ersten Folie aus biorientiertem Polypropylen eine physikalische Trocknung z.B. mittels warmer Gebläseluft bei einer Temperatur unterhalb von 60°C erfolgt, was zur Verdampfung insbesondere der zur Neutralisation des Acrylpolymers verwendeten organischen Base und zur Auslösung der Polykondensationsreaktion des Aminoharzes mit dem Acrylpolymer führt.

Anschließend wird auf die bedruckte Seite der Polypropylenfolie ein sogenannter komplexierender, z.B aus zwei Komponenten bestehender, dem Fachmann bekannter Klebstoff auf lösungsmittelfreier Polyurethanbasis, der z.B im Handel unter dem Namen EC₂.2336® + EC₂ 2309D® von der Firma SWIFT ADHESIF SA, Frankreich, erhältlich ist, in einer Menge von 1,8 g/m² (Trockensubstanz) aufgetragen.

Anschließend wird auf den abgeschiedenen Klebstoff eine zweite, ebenfalls 20 µm dicke Folie aus biorientiertem Polypropylen aufgeklebt, die so mittels des Klebstoffs auf die erste Folie aufkaschiert wird.

Das so erhaltene Laminat wird sodann in herkömmlicher, dem Fachmann bekannter Weise verschweißt, was im allgemeinen bei einer Temperatur in der Größenordnung von 130-140°C während 1 Sek. bei einem Druck von 3 Bar erfolgt.

Auf diese Weise findet im Verlauf des Schweißvorgangs die Reaktion zwischen den im Polymerteil der Farbe vorhandenen funktionellen Gruppen und den im Klebstoff vorhandenen funktionellen Gruppen unter Bildung einer vernetzten Struktur statt, durch die dem Aufbau die endgültigen Bindungskräfte verliehen werden.

Danach erfolgt die Messung der Bindungskräfte vor dem Verschweißen und nach der Versiegelung durch Verschweißen, wie dem Fachmann bekannt, mittels eines Zugkraftmessers. Diese Versuche werden mit auf eine Größe von 15 mm zugeschnittenen Folienabschnitten durchgeführt.

Die Ergebnisse aus den Messungen der Bindungskräfte mittels des im Handel erhältlichen Zugkraftmessers Modell 81-803, lieferbar von der Firma FRANCK, Weinheim, Deutschland, sind in der folgenden Tabelle I aufgeführt.

**Tabelle I**

| Bindungskräfte in g/15 mm Folie gemessen | | |
|---|---|---|
| Beispiele | Vor dem Versiegeln | Nach dem Versiegeln |
| Vergleichsbeispiel 1 | 140 | 80 |
| Vergleichsbeispiel 2 | 180 | 60 |
| Beispiel 3 (erfindungsgemäß) | 200 | Reißen der Folie |
| Beispiel 4 (erfindungsgemäß) | Reißen der Folie | Reißen der Folie |
| Beispiel 5 (erfindungsgemäß) | 300 | Reißen der Folie |
| Beispiel 6 (erfindungsgemäß) | 270 | Reißen der Folie |

Aus den in Tabelle I aufgeführten Versuchsergebnissen geht klar hervor, daß bei den Vergleichsfarbenzusammensetzungen der Beispiele 1 und 2 die Bindungskraft höchstens 180 g/15 mm vor dem Versiegeln und höchstens 80 g/15 mm nach dem Versiegeln beträgt und das Versiegeln somit zu einer starken Verminderung der Bindungskräfte führt.

Dagegen beträgt die Bindungskraft im Rahmen der erfindungsgemäßen Farbenzusammensetzung, bei der ein mit einem Acrylharz kombiniertes Aminoharz verwendet wird, mindestens 200 g/15 mm vor dem Versiegeln und ist in allen Fällen höher als die zum Reißen der Folie erforderliche Kraft, was höchst bemerkenswert ist.

Somit zeigen diese quantitativen Vergleichsversuche den durch die vorliegende Erfindung erzielten technischen Fortschritt sowie deren unerwarteten Charakter.

## Patentansprüche

1. Verfahren zur Herstellung einer laminierten Mehrschichtkunststoffolienstruktur aus Polyolefin unter Verwendung einer komplexierbaren Farbenzusammensetzung auf Wasserbasis in Form einer Dispersion, Emulsion oder in alkalilöslicher Form enthaltend mindestens ein Acryl- und/oder Vinylharz, und ein Aminoharz und eine organischen Base des Amintyps oder Ammoniak, wobei ein pH-Wert zwischen 5 und 10 eingestellt ist,
wobei eine erste Polyolefinfolie mit der Farbzusammensetzung bedruckt wird,
wobei die bedruckte Polyolefinfolie einer physikalischen Trocknung bei Temperaturen unterhalb 60 °C unterzogen wird,
wobei im Zuge der physikalischen Trocknung die organische Base des Amintyps oder der Ammoniak unter Absenkung des pH-Wertes verdampft und so das Acrylharz mit dem Aminoharz polykondensiert und vernetzt wird,
wobei anschließend an die physikalische Trocknung ein Klebstoff auf der bedruckten ersten Polyolefinfolie bedruckungsseitig abgeschieden wird, und
wobei schließlich eine zweite Polyolefinfolie mit der ersten Polyolefinfolie verschweißt wird.

2. Verfahren nach Anspruch 1, wobei das Aminoharz ein Aminoplastkondensat aus der Umsetzung von Formaldehyd mit einem Amin oder Amid, vorzugsweise ausgewählt aus Harnstoff, Melamin oder Benzoguanamin, ist.

3. Verfahren nach Anspruch 1 oder 2, wobei das Aminoharz ausgewählt ist aus der Gruppe:
a) Harnstoff-Formaldehyd-Aminoplastkondensat der folgenden Formel I: 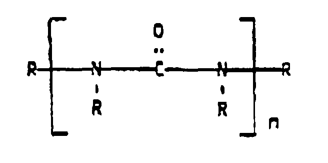
b) Melamin-Formaldehyd-Aminoplastkondensat der folgenden Formel II: 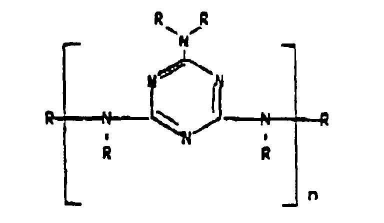
c) Aminoplastkondensat der folgenden Formel III: 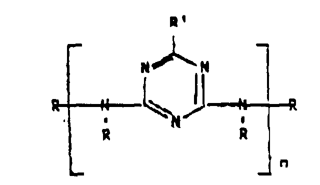
wobei in den Formeln I, II oder III die Substituenten folgende Bedeutungen besitzen: R kann aus der Gruppe Wasserstoff, einem Rest -CH₂OH; -CH₂OR"; -CH₂COOH oder -CH₂COR" ausgewählt sein, R" ist unabhängig ausgewählt aus einem Niederalkyl(C₁-C₆)-Rest, insbesondere -CH₃, -C₂H₅, -C₃H₇, -C₄H₉, der Rest R' ist unabhängig ausgewählt aus Wasserstoff, einem Niederalkyl-(C₁-C₆)-Rest, insbesondere -CH₃, -C₆H₅, n ist eine ganze Zahl, zwischen 1 und 10 und bevorzugt zwischen 1 und 3.

4. Verfahren nach einem der Ansprüche 1 bis 3, wobei die Farbenzusammensetzung einen pH-Wert von 7,5 bis 9,0, vorzugsweise von 7,8 bis 8,5 aufweist und wobei die Farbenzusammensetzung ggf. eine organische Säure zur Einstellung des pH-Wertes aufweist.

5. Verfahren nach einem der Ansprüche 1 bis 4, wobei die organische Base ein primäres, sekundäres oder tertiäres C₁-C₆-Alkylamin, vorzugsweise Triethylamin, oder ein primäres, sekundäres oder tertiäres C₁-C₆-Alkanolamin, vorzugsweise Triethanolamin, oder Morpholin ist.

6. Verfahren nach einem der Ansprüche 1 bis 5, wobei die Farbenzusammensetzung para-Toluolsulfonsäure oder eines ihrer Salze oder Ester enthält.

7. Verfahren nach einem der Anspruche 1 bis 6, wobei das Acryl- und/oder Vinylharz durch eine im wesentlichen auf den im Molekül vorhandenen Hydroxyl- und Carboxylgruppen beruhende Säurefunktionalität gekennzeichnet ist und eine Säurezahl zwischen 10 und 100, bevorzugt zwischen 25 und 50, aufweist.

8. Verfahren nach einem der Ansprüche 1 bis 7, wobei das Acryl- und/oder Vinylharz 1 bis 45 Gew.-%, auf Trockensubstanz berechnet, des Gesamtgewichts der Farbenzusammensetzung, bevorzugt 15 bis 35 Gew.-%, auf Trockensubstanz berechnet, darstellt.

9. Verfahren nach einem der Ansprüche 1 bis 8, wobei das Aminoharz zwischen 1 und 15 Gew.-%, vorzugsweise zwischen 1 und 8 Gew.-%, auf Trockensubstanz berechnet, des Gesamtgewichts der Farbenzusammensetzung, besonders bevorzugt zwischen 2 und 4 Gew.-%, auf Trockensubstanz berechnet, darstellt.

10. Verfahren nach einem der Ansprüche 1 bis 9, wobei das Aminoharz ausgewählt ist aus der Gruppe Hexamethoxymethylmelamin, Hexamethoxybutoxymethylmelamin, Iminomethoxymethylmelamin und Mischungen daraus.

11. Verfahren nach einem der vorhergehenden Ansprüche, wobei die Farbenzusammensetzung einen flüchtigen Bestandteil enthält, der eine wäßrige Phase, die selbst aus Wasser besteht, und die organische Base des Amintyps oder Ammoniak und/oder eine der organischen Säuren zur Einstellung des pH-Wertes der Farbenzusammensetzung sowie vorzugsweise ein insbesondere mit Wasser mischbares organisches Lösungsmittel, insbesondere ein Alkohol, enthält.

12. Verfahren nach Anspruch 11, wobei das organische Lösungsmittel des flüchtigen Bestandteils 1 bis 10 Gew.-% des Gesamtgewichts der Farbenzusammensetzung, ist.

13. Verfahren nach einem der Ansprüche 1 bis 12, dadurch gekennzeichnet, daß sie aus
- 15 bis 35 Gew.-% Acrylharz, auf Trockensubstanz berechnet,
- 1 bis 8 Gew.-% Aminoharz, auf Trockensubstanz berechnet,
- einer organischen Base des Amintyps oder Ammoniak zur Einstellung des pH-Wertes auf 7,5 bis 9
- Rest: wäßrige Phase, besteht.

## Claims

1. Process for producing a laminated multilayer plastic film structure comprising polyolefin using a complexable water-borne ink composition in the form of a dispersion or emulsion or in alkali-soluble form comprising at least one acrylic resin and/or vinyl resin, an amino resin and an organic base of the amine type or ammonia, a pH of between 5 and 10 being established,
in which a first polyolefin film is printed with the ink composition,
in which the printed polyolefin film is subjected to physical drying at temperatures below 60°C,
in which, during physical drying, the organic base of the amine type or the ammonia evaporates, accompanied by a reduction in the pH, and so the acrylic resin is polycondensed and crosslinked with the amino resin,
in which, following physical drying, an adhesive is deposited on the printed side of the first polyolefin film which has been printed, and
in which, finally, a second polyolefin film is welded to the first polyolefin film.

2. Process according to Claim 1, in which the amino resin is an aminoplastic condensation product obtained from the reaction of formaldehyde with an amine or amide, preferably selected from urea, melamine or benzoguanamine.

3. Process according to Claim 1 or 2, in which the amino resin is selected from the group consisting of:
a) a urea/formaldehyde aminoplastic condensation product of the formula I below: 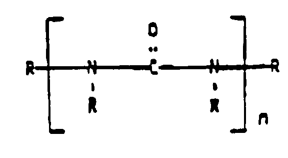
b) a melamine/formaldehyde aminoplastic condensation product of the formula II below: 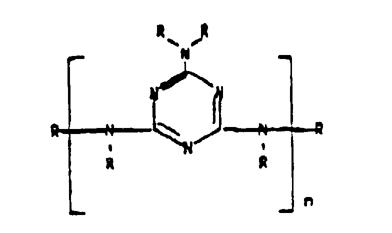
c) an aminoplastic condensation product of the formula III below: 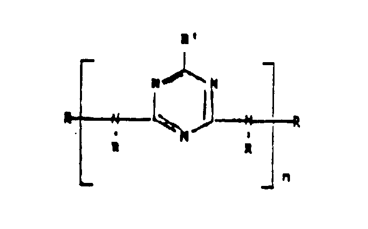
the substituents having the following meanings in the formula I, II or III: R can be selected from the group consisting of hydrogen and a radical -CH₂OH, -CH₂OR", -CH₂COOH or -CH₂COR", R" is independently selected from a lower C₁-C₆-alkyl radical, in particular -CH₃, -C₂H₅, -C₃H₇ or -C₄H₉, the radical R' is independently selected from hydrogen or a lower C₁-C₆-alkyl radical, in particular -CH₃ or -C₆H₅, and n is an integer between 1 and 10 and preferably between 1 and 3.

4. Process according to one of Claims 1 to 3, in which the ink composition has a pH of 7.5 to 9.0, preferably of 7.8 to 8.5, and in which the ink composition optionally comprises an organic acid for adjusting the pH.

5. Process according to one of Claims 1 to 4, in which the organic base is a primary, secondary or tertiary C₁-C₆-alkylamine, preferably triethylamine, or a primary, secondary or tertiary C₁-C₆-alkanolamine, preferably triethanolamine, or morpholine.

6. Process according to one of Claims 1 to 5, in which the ink composition contains paratoluenesulphonic acid or one of its salts or esters.

7. Process according to one of Claims 1 to 6, in which the acrylic and/or vinyl resin is characterized by an acid functionality mainly resulting from the hydroxyl and carboxyl groups present in the molecule and has an acid number of between 10 and 100, preferably between 25 and 50.

8. Process according to one of Claims 1 to 7, in which the acrylic and/or vinyl resin constitutes 1 to 45 % by weight, based on dry matter, of the total weight of the ink composition, preferably 15 to 35 % by weight, based on dry matter.

9. Process according to one of Claims 1 to 8, in which the amino resin constitutes between 1 and 15 % by weight, preferably between 1 and 8 % by weight, based on dry matter, of the total weight of the ink composition, particularly preferably between 2 and 4 % by weight, based on dry matter.

10. Process according to one of Claims 1 to 9, in which the amino resin is selected from the group consisting of hexamethoxymethylmelamine, hexamethoxybutoxymethylmelamine, iminomethoxymethylmelamine and mixtures thereof.

11. Process according to one of the preceding claims, in which the ink composition contains a volatile component which contains an aqueous phase which is itself composed of water, the organic base of the amine type or ammonia and/or one of the organic acids for adjusting the pH of the ink composition, and preferably an organic solvent which is in particular miscible with water, in particular an alcohol.

12. Process according to Claim 11, in which the organic solvent of the volatile component is 1 to 10 % by weight of the total weight of the ink composition.

13. Process according to one of Claims 1 to 12, characterized in that the composition consists of
- 15 to 35 % by weight of acrylic resin, based on dry matter,
- 1 to 8 % by weight of amino resin, based on dry matter,
- an organic base of the amine type or ammonia for adjusting the pH to 7.5 to 9,
- remainder: aqueous phase.

## Revendications

1. Procédé de préparation d'une structure de film plastique multicouche stratifiée de polyoléfine en utilisant une composition d'encre complexable à base aqueuse sous forme d'une dispersion, d'une émulsion ou sous forme soluble dans les alcalis, contenant au moins une résine acrylique et/ou une résine vinylique et une résine amino et une base organique du type amine ou de l'ammoniac, un pH compris entre 5 et 10 étant établi,
un premier film de polyoléfine étant imprimé à l'aide de la composition d'encre,
le film de polyoléfine imprimé étant soumis à un séchage physique à des températures inférieures à 60°C, la base organique du type amine ou l'ammoniac étant évaporé(e) au cours du séchage physique avec diminution du pH et la résine acrylique étant ainsi polycondensée et réticulée avec la résine amino,
un adhésif étant appliqué, après le séchage physique, sur le premier film de polyoléfine imprimé sur la face imprimée, et
un deuxième film de polyoléfine étant enfin soudé avec le premier film de polyoléfine.

2. Procédé selon la revendication 1, dans lequel la résine amino est un condensat aminoplaste provenant de la réaction du formaldéhyde avec une amine ou un amide, de préférence choisi(e) parmi l'urée, la mélamine ou la benzoguanamine.

3. Procédé selon la revendication 1 ou 2, dans lequel la résine amino est choisie parmi le groupe constitué de :
a) un condensat aminoplaste urée-formaldéhyde de formule I suivante : 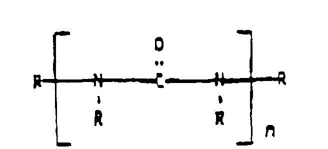
b) un condensat aminoplaste mélamine-formaldéhyde de formule II suivante : 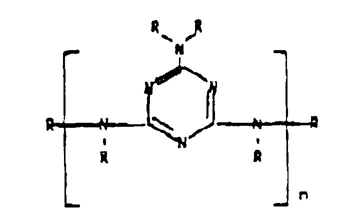
c) un condensat aminoplaste de formule III suivante : 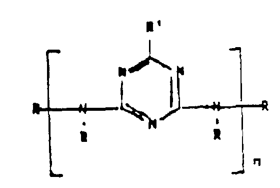
où, dans les formules I, II ou III, les substituants ont les significations suivantes : R peut être choisi parmi le groupe constitué d'un hydrogène, d'un radical -CH₂OH ; -CH₂OR" ; -CH₂COOH ou -CH₂COR", R" est choisi indépendamment parmi un radical alkyle inférieur en C₁-C₆, en particulier -CH₃, -C₂H₅, -C₃H₇, -C₄H₉, le radical R' est choisi indépendamment parmi un hydrogène, un radical alkyle inférieur en C₁-C₆, en particulier -CH₃, -C₆H₅, n est un nombre entier compris entre 1 et 10 et de préférence entre 1 et 3.

4. Procédé selon l'une quelconque des revendications 1 à 3, dans lequel la composition d'encre présente un pH de 7,5 à 9,0, de préférence de 7,8 à 8,5 et dans lequel la composition d'encre contient éventuellement un acide organique en vue d'ajuster le pH.

5. Procédé selon l'une quelconque des revendications 1 à 4, dans lequel la base organique est une alkylamine en C₁-C₆ primaire, secondaire ou tertiaire, de préférence la triéthylamine ou une alcanolamine en C₁-C₆ primaire, secondaire ou tertiaire, de préférence la triéthanolamine ou la morpholine.

6. Procédé selon l'une quelconque des revendications 1 à 5, dans lequel la composition d'encre contient de l'acide para-toluènesulfonique ou un de ses sels ou esters.

7. Procédé selon l'une quelconque des revendications 1 à 6, dans lequel la résine acrylique et/ou vinylique est caractérisée par une fonctionnalité acide principalement au niveau des groupes hydroxy et carboxy présents dans la molécule et présente un indice d'acide compris entre 10 et 100, de préférence entre 25 et 50.

8. Procédé selon l'une quelconque des revendications 1 à 7, dans lequel la résine acrylique et/ou vinylique constitue de 1 à 45% en poids en matière sèche, du poids total de la composition d'encre, de préférence de 15 à 35% en poids en matière sèche.

9. Procédé selon l'une quelconque des revendications 1 à 8, dans lequel la résine amino constitue entre 1 et 15% en poids, de préférence entre 1 et 8% en poids de matière sèche, du poids total de la composition d'encre, particulièrement préférablement entre 2 et 4% en poids en matière sèche.

10. Procédé selon l'une quelconque des revendications 1 à 9, dans lequel la résine amino est choisie parmi le groupe constitué de l'hexaméthoxyméthylmélamine, de l'hexaméthoxybutoxyméthylmélamine, de l'imminométhoxyméthylmélamine et de leurs mélanges.

11. Procédé selon l'une quelconque des revendications précédentes, dans lequel la composition d'encre comprend un composant volatil comprenant une phase aqueuse qui est elle-même constituée d'eau et la base organique du type amine ou de l'ammoniac et/ou l'un des acides organiques, en vue d'ajuster le pH de la composition d'encre, et de préférence un solvant organique en particulier miscible à l'eau, en particulier un alcool.

12. Procédé selon la revendication 11, dans lequel le solvant organique du composant volatil constitue de 1 à 10% en poids du poids total de la composition d'encre.

13. Procédé selon l'une quelconque des revendications 1 à 12, caractérisé en ce que la composition d'encre est constituée de :
- 15 à 35% en poids en matière sèche de résine acrylique,
- 1 à 8% en poids en matière sèche de résine amino,
- une base organique du type amine ou de l'ammoniac en vue d'ajuster le pH entre 7,5 et 9
- le reste : une phase aqueuse.
